# EUROPEAN PATENT APPLICATION

(11) **EP 4 657 922 A1**
(43) Date of publication of application: **03.12.2025**
(21) Application number: 23923858.7
(22) Date of filing: 19.12.2023
(51) Int. Cl.: H04W 28/16, H04W 84/00

(54) **COMMUNICATION METHOD, ELECTRONIC DEVICE AND COMPUTER-READABLE MEDIUM**

(30) Priority: 24.02.2023 CN 202310209583
(71) Applicant: ZTE CORPORATION, Shenzhen, Guangdong 518057 (CN)
(72) Inventor: ZHANG, Qiang, Shenzhen, Guangdong 518057 (CN); ZHOU, Jianfeng, Shenzhen, Guangdong 518057 (CN); WANG, Weibin, Shenzhen, Guangdong 518057 (CN); LU, Guanghui, Shenzhen, Guangdong 518057 (CN); MAO, Lei, Shenzhen, Guangdong 518057 (CN); SONG, Jie, Shenzhen, Guangdong 518057 (CN); NIU, Jiaohong, Shenzhen, Guangdong 518057 (CN); YANG, Jianjun, Shenzhen, Guangdong 518057 (CN); ZHENG, Xingming, Shenzhen, Guangdong 518057 (CN); WANG, Changjin, Shenzhen, Guangdong 518057 (CN)
(74) Representative: Ziebig Hengelhaupt Intellectual Property Attorneys Patentanwaltskanzlei PartGmbB
(86) International application number: PCT/CN2023/139847
(87) International publication number: WO 2024/174695

(57) **Abstract**

Provided in the embodiments of the present application are a communication method, an electronic device and a computer-readable medium. The method comprises: a network control unit (NCU) communicating with a first network element, wherein the NCU is used for providing a function related to network control, and the first network element comprises at least one of a network message processing unit (NPU), a network data unit (NDU) and a network intelligence unit (NIU), the NPU being used for providing a function related to network packet forwarding, the NDU being used for providing a function related to data management, and the NIU being used for providing a function related to endogenous intelligence.

## Description

### CROSS-REFERENCE TO RELATED APPLICATIONS

The present application claims priority to the Chinese patent application No. 202310209583.8 filed on February 24, 2023 to the China Patent Office, and entitled "COMMUNICATION METHOD, ELECTRONIC DEVICE AND COMPUTER-READABLE MEDIUM", the entire content of which is incorporated herein by reference.

### TECHNICAL FIELD

The present application relates to the technical field of communications, in particular to a communication method, an electronic device and a computer-readable medium.

### BACKGROUND

With the continuous development of communication technology, technologies such as 6G will help achieve deep integration between the real physical world and the virtual digital world, building a new world of intelligent connectivity and digital twins for all things. New services such as immersive cloud extended-range (XR), holographic communication, sensory interconnection, intelligent interaction, communication perception, inclusive intelligence, digital twins, and global coverage are widely and deeply applied in people's lives, social production, public services, and other fields.

Correspondingly, the emergence of the new services and new technologies also drives the continuous evolution of communication network architectures towards the future. For example, with the support of new functions and new scenarios, the number of network functions in the communication network architectures is also increasing. For instance, the corresponding number of network elements has reached more than 40, so in this case, how to ensure the high efficiency and reliability of a communication process is still an urgent technical problem that needs to be solved in the art.

### SUMMARY

Objectives of embodiments of the present application are to provide a communication method, an electronic device and a computer-readable medium.

To solve the above technical problems, the embodiments of the present application are implemented through various aspects below.

In a first aspect, an embodiment of the present application provides a communication method, performed by a network control unit (NCU), including: communicating with a first network element; wherein the NCU is configured to provide a function related to network control, the first network element includes at least one of a network packet unit (NPU), a network data unit (NDU) or a network intelligent unit (NIU), the NPU is configured to provide a function related to network packet forwarding, the NDU is configured to provide a function related to data management, and the NIU is configured to provide a function related to endogenous intelligence.

In a second aspect, an embodiment of the present application provides a communication method, performed by a network data unit (NDU), including: communicating with a second network element based on a data channel; wherein the NDU is configured to provide a function related to data management, the second network element includes at least one of a network control unit (NCU) or a network intelligent unit (NIU), the NCU is configured to provide a function related to network control, and the NIU is configured to provide a function related to endogenous intelligence.

In a third aspect, an embodiment of the present application provides a communication method, performed by a network packet unit (NPU), including: communicating with a third network element; wherein the NPU is configured to provide a function related to network packet forwarding, and the third network element at least includes a network control unit (NCU).

In a fourth aspect, an embodiment of the present application provides a communication method, performed by a network intelligent unit (NIU), including: communicating with a fourth network element; wherein the NIU is configured to provide a function related to endogenous intelligence, the fourth network element includes at least one of a network control unit (NCU) or a network data unit (NDU), the NCU is configured to provide a function related to network control, and the NDU is configured to provide a function related to data management.

In a fifth aspect, an embodiment of the present application provides an electronic device, including: a memory, a processor, and computer-executable instructions stored on the memory and capable of running on the processor. The computer-executable instructions, when executed by the processor, implement the steps of the method according to the first aspect, or the second aspect, or the third aspect or the fourth aspect.

In a sixth aspect, an embodiment of the present application provides a computer-readable storage medium. The computer-readable storage medium is configured to store computer-executable instructions. The computer-executable instructions, when executed by a processor, implement the steps of the method according to the first aspect, or the second aspect, or the third aspect or the fourth aspect.

### BRIEF DESCRIPTION OF DRAWING(S)

To illustrate the technical solutions in embodiments of the present application or in the prior art more clearly, the accompanying drawings required for describing the embodiments or the prior art will be briefly introduced below. Apparently, the accompanying drawings in the following description are only some embodiments recorded in the present application, and a person of ordinary skill in the art may still derive other accompanying drawings from these accompanying drawings without creative efforts.
FIG. 1 shows a schematic diagram of a communication network architecture provided by an embodiment of the present application.
FIG. 2 shows a schematic architecture diagram of a multi-access network adaptor provided by an embodiment of the present application.
FIG. 3a shows a first schematic diagram of a user registration flow provided by an embodiment of the present application.
FIG. 3b shows a second schematic diagram of a user registration flow provided by an embodiment of the present application.
FIG. 3c shows a third schematic diagram of a user registration flow provided by an embodiment of the present application.
FIG. 3d shows a first schematic diagram of an interaction flow of a user registration flow provided by an embodiment of the present application.
FIG. 3e shows a second schematic diagram of an interaction flow of a user registration flow provided by an embodiment of the present application.
FIG. 4a shows a schematic diagram of a session establishment flow provided by an embodiment of the present application.
FIG. 4b shows a schematic diagram of an interaction flow of a session establishment flow provided by an embodiment of the present application.
FIG. 5a shows a first schematic diagram of a cross-NCU switchover flow provided by an embodiment of the present application.
FIG. 5b shows a second schematic diagram of a cross-NCU switchover flow provided by an embodiment of the present application.
FIG. 5c shows a schematic diagram of an interaction flow of a cross-NCU switchover flow provided by an embodiment of the present application.
FIG. 6a shows a first schematic flowchart of a data analysis service provided by an embodiment of the present application.
FIG. 6b shows a second schematic flowchart of a data analysis service provided by an embodiment of the present application.
FIG. 6c shows a schematic diagram of an interaction flow of a data analysis service provided by an embodiment of the present application.
FIG. 7 is a schematic diagram of a hardware structure of an electronic device for performing the communication method provided by an embodiment of the present application.

### DETAILED DESCRIPTION

In order to enable those skilled in the art to better understand the technical solution in the present application, the technical solution in embodiments of the present application will be described clearly and completely below with reference to the accompanying drawings in the embodiments of the present application. Obviously, the described embodiments are only part of the embodiments of the present application, rather than all of the embodiments. Based on the embodiments in the present application, all other embodiments obtained by those of ordinary skill in the art without creative effort fall within the scope of protection of the present application.

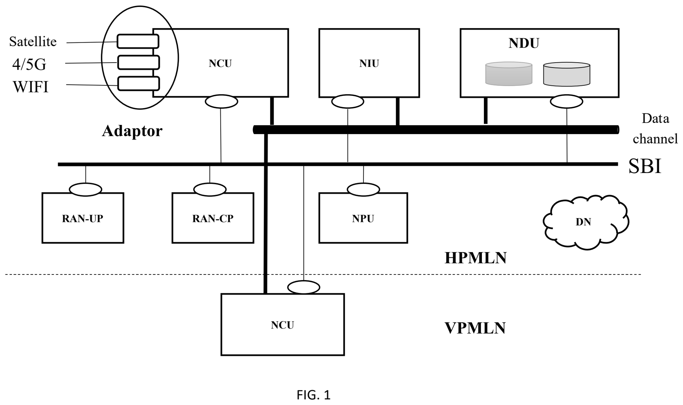

As shown in FIG. 1, it is a schematic diagram of a communication network architecture provided by the present application. The communication network architecture is an extremely simple, distributed and autonomous future network structure (may also be referred to as a 6G communication network architecture), and may include, but is not limited to, one or more of a network control unit (NCU), a network packet unit (NPU), a network data unit (NDU), and a network intelligent unit (NIU), etc. It will be appreciated that, the names of the various network units in the communication network architecture provided by the present application may be, but are not limited to, the aforementioned NCU, NPU, NIU and NDU. That is, the names of the various network units in the communication network architecture provided by the present application may be flexibly designed according to communication standards or protocols or the like, which is not limited here.

As a network control center in the communication network architecture, the NCU is configured to provide a function related to network control, including, but is not limited to, mobility management, session management and other expanded functions, such as deterministic communication, computing-networking collaboration, and communication-sensing integration; and the NCU is also, for example, responsible for driving tasks, completing collaborative tasks such as connectivity, computing power, intelligence, and perception.

The NPU is configured to provide a function related to network packet forwarding, for example, the NPU may inherit a basic function of user plane data forwarding in a related communication network architecture (such as a 5G network architecture and a 4G network architecture), and introduce a user plane programmable function, so that the purpose of flexibly defining a processing logic of a user plane is achieved, and at the same time, evolution towards functional characteristics such as computing-networking service perception, deterministic communication and fine-grained subnets is achieved.

The NDU is configured to provide a function related to data management, such as a unified converged data plane. On the basis that a unified data repository (UDR)/unstructured data storage function (UDSF) in the related communication network architecture (such as the 5G network architecture and the 4G network architecture) provide(s) user core data, in the present application, network data and computing power data are further newly added, a unified data format is defined to provide a data channel to the outside, and the problem that a current independent data plane cannot be decoupled in different manufacturers is solved.

The NIU is configured to provide a function related to endogenous intelligence, such as providing artificial intelligence (AI) task scheduling management, online reasoning, online training, knowledge model repositories and other functions, as well as enabling cross-layer and cross-domain intelligence between multiple nodes through distributed collaborative learning. It achieves internal network simplification, elasticity, and intelligence while offering flexible Al services to external applications.

As for the aforementioned communication network architecture provided by the present application, please refer to FIG. 1 again. Internal interaction of the communication network architecture may rely on a double-bus architecture, one bus is a reused service based interface (SBI) in the related communication network architecture (such as the 5G network architecture and the 4G network architecture), that is, a service based design concept is continued, a service based range is developed from a core network control plane to a user plane, further extending to a radio access side, and thus end-to-end services in the field of mobile networks are achieved. For example, in the present embodiment, the service based interface may provide interaction of control messages between network units.

The other bus is a data bus newly added in the present application, namely a data channel or a data channel bus, such that different network units (such as the NCU and the NIU) may interact with the NDU through the data channel, thereby achieving efficient acquisition and processing of data. For example, in the present embodiment, the data channel is configured to provide high-speed transmission of data (such as core data, network data and computing power data).

It will be appreciated that, in FIG. 1, an HPLMN is a home public land mobile network, and a VPLMN is a visited public land mobile network. That is to say, the present application may provide one or more network units, such as an NCU at a user visited place and an NCU at a user home.

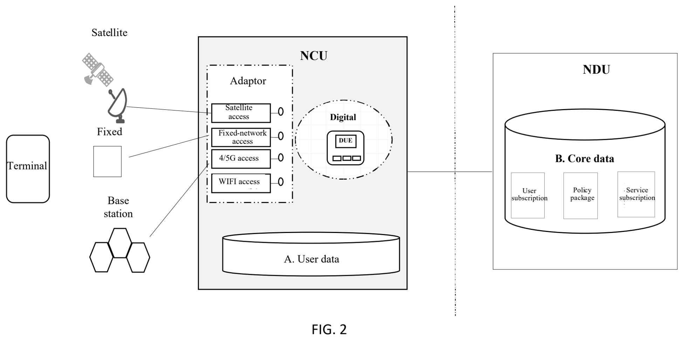

Further, as for the NCU in the aforementioned communication network architecture, it may further support at least one network access manner, and different network access manners (may also be referred to as multi-modal access) correspond to different network adaptors. For example, in combination with FIG. 2, for multi-modal access on the NCU, e.g., network access manners such as satellite access, fixed network access, 4G/5G access and WIFI access, access may be performed through different network adaptors (or being referred to as adaptors). In the present application, the network adaptors may be realized in a mode of components or micro services, so as to be plug-and-play in the NCU, achieving adaptation and transition of different protocols, and ensuring communication performance and flexible access.

It can be seen from the aforementioned content that, compared with the communication network architecture (such as the 5G network architecture and the 4G network architecture) provided in the related art, the network units in the communication network architecture provided in the present application are obtained by reconstructing and aggregating network elements of the same type, for example, they are obtained by simplifying various network functions (NFs) of a control plane in the related communication network architecture according to function classifications.

Specifically, part of functions such as logic processing in an access and mobility management function (AMF), a session management function (SMF), a network slice selection function (NSSF), a network exposure function (NEF), a policy control function (PCF), unified data management (UDM) and the like in the 5G communication network architecture may be included in a single network unit (e.g., the NCU) as customizable and clippable micro services. Specialized data processing may also be performed on static data, UDR data and the like of the UDM and the PCF by a unified network data unit (e.g., the NDU). For another example, a user plane function (UPF) and a network data analytics function (NWDAF) are optimized and enhanced, so that original 40+ network elements are decreased to 4 network elements, achieving unification of function types, flexible customization of the network elements, flat networking and a simple topological structure. Therefore, compared with the communication network architecture in the related art, this communication network architecture has high maintainability, scalability, network robustness and the like.

For example, as for the maintainability, since the communication network architecture provided in the present application has a greatly decreased number of network elements, the difficulties in network planning, deployment, provisioning and maintenance are lowered, the number of NF interactions is reduced, signaling transmission is easy, a troubleshooting period is short, and positioning is easy.

For another example, as for the scalability, since the communication network architecture provided in the present application has a greatly decreased number of network elements, cycles for launching newly added functions and interoperability testing between different manufacturers are shortened, the customization ability to industry users (To B, 2B) is enhanced, and user development is accelerated.

For another example, as for the network robustness, since the communication network architecture provided in the present application has a greatly decreased number of network elements, a network has a strong self-inspection and self-healing mechanism, and has a small fault influence surface; and a cloudification safety boundary is clear, lowering the risk of being attacked.

Of course, for the communication network architecture provided in the present application, in addition to the aforementioned advantages of maintainability, scalability, network robustness and the like, adopting the communication network architecture provided in the present application can also comprehensively improve users' service experience and network-cloud convergence service capabilities centered on user/customer needs, and enhance the scope of mobile network services.

That is to say, the communication network architecture provided in the present application can meet the different needs of new services and new scenarios, such as service scenarios represented by immersive XR, metaverse, etc. It not only requires basic connection services, but also edge computing resource services, high-precision environment and object perception services, and network Al services to assist in user behavior prediction, optimal routing selection, etc.

In addition, from the perspective of a network deployment location, a core network (or future core network) in the communication network architecture provided in the present application supports centralized cloudification deployment as well as decentralized edge cloudification deployment. From the perspective of the network access manners, the core network in the communication network architecture provided in the present application can support multiple access manners such as fixed, satellites, WIFI, and ground base stations.

Further, considering that the number of the network elements in the communication network architecture provided in the present application is significantly reduced compared with the communication network architecture provided in the related art, in this case, meeting different communication requirements (user registration, session establishment, cross-NCU switchover, data analysis services, etc.) based on the communication network architecture provided in the present application will inevitably significantly reduce the number of interactions between the network elements, so that the communication flow is greatly simplified, communication efficiency is improved, and the high efficiency and reliability of the communication process are ensured. Interactive network elements that may be involved in achieving the communication purposes such as user registration, session establishment, cross-NCU switchover, and data analysis services are as follows.

For example, the NCU communicates with a first network element (e.g., at least one of the NPU, the NDU or the NIU) to achieve the purposes such as user registration, session establishment, cross-NCU switchover, and data analysis services.

For another example, the NDU communicates with a second network element (e.g., the NCU and/or the NIU) based on a data channel to achieve the purposes such as user registration, session establishment, cross-NCU switchover, and data analysis services.

For another example, the NPU communicates with a third network element (e.g., the NCU) to achieve the purposes such as user registration, session establishment, cross-NCU switchover, and data analysis services.

For yet another example, the NIU communicates with a fourth network element (e.g., the NCU and/or the NDU) to achieve the purposes such as user registration, session establishment, cross-NCU switchover, and data analysis services.

Of course, it is to be noted that, during communication based on the communication network architecture provided in the present application, in addition to achieving the aforementioned user registration, session establishment, cross-NCU switchover and data analysis services, cell switchover, random access and the like may further be achieved, which is not limited here.

On the basis of the communication network architecture provided above, achieving processes of the different communication purposes (e.g., user registration, session establishment, cross-NCU switchover, data analysis services, etc.) are exemplarily described below in combination with different embodiments as follows.

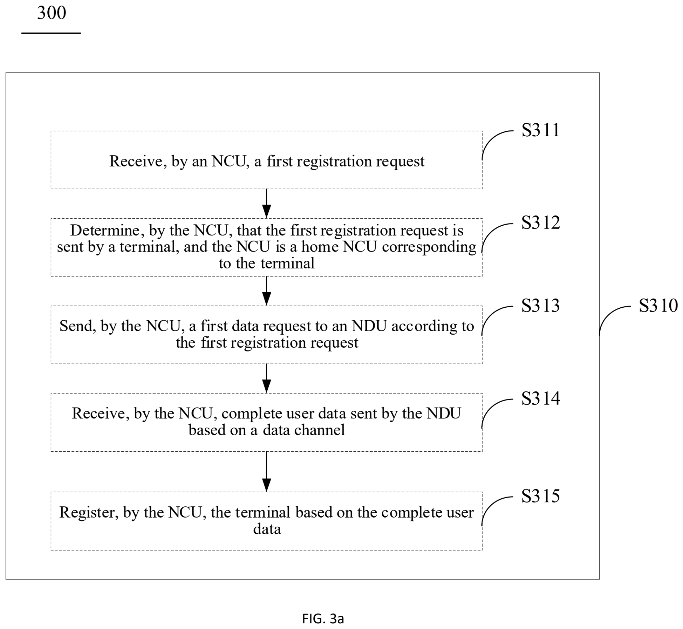

FIG. 3a shows a schematic flowchart of a communication method 300 provided by an embodiment of the present application. The method 300 may be performed by an NCU. In other words, the method 300 may be performed by software or hardware installed in the NCU. As shown in FIG. 3a, the method 300 may include the following steps.

S310, the NCU communicates with a first network element.

The NCU is configured to provide a function related to network control, the first network element includes at least one of an NPU, an NDU or an NIU, the NPU is configured to provide a function related to network packet forwarding, the NDU is configured to provide a function related to data management, and the NIU is configured to provide a function related to endogenous intelligence.

It can be understood that, an achieving process of S310 can refer to the relevant descriptions in the aforementioned communication network architecture, besides, as a possible implementation, it is assumed that the NCU communicates with the first network element to achieve user registration, then the achieving process may be different according to different positions where a user initiates a registration request. For example, user registration may be initiated at a visited place or at a home. Registration processes under different scenarios are described below in combination with Implementation 1 to Implementation 3 as follows.

### Implementation 1

Assuming that a user (may also be referred to as physical user equipment (PUE)) initiates a registration flow at a home, then the first network element may include the NDU, and the process that the NCU communicates with the first network element may include S311 to S314 shown in FIG. 3a as follows.

S311, the NCU receives a first registration request.

The first registration request may carry, but is not limited to, a user registration type (e.g., initial registration, periodic position update, etc.), capability information of a terminal (e.g., positioning capability of the terminal, communication-sensing integration capability, voice over new radio (VoNR) capability, etc.), position information of the terminal, a terminal identification, etc.

S312, the NCU determines that the first registration request is sent by a terminal, and the NCU is a home NCU corresponding to the terminal.

The NCU may determine a sender of the first registration request according to relevant information carried in the first registration request or a terminal access manner, as well as determine whether the NCU is the home NCU (H-NCU) or a visited NCU (V-NCU) of the terminal, and then select a corresponding registration flow based on a determined result so as to determine smooth execution of the registration flow.

S313, the NCU sends a first data request to the NDU according to the first registration request.

The first data request is used for requesting complete user data corresponding to the terminal, such as at least one of terminal-related core data (e.g., user subscription data, and policy data), network data or computing power data.

Correspondingly, after receiving the first data request sent by the NCU, the NDU may send the complete user data corresponding to the first data request to the NCU based on a data channel. In the present application, by adopting the data channel, high-speed delivery of the complete user data can be achieved, and meanwhile, the safety of data transmission is ensured.

S314, the NCU receives the complete user data sent by the NDU based on the data channel.

S315, the NCU registers the terminal based on the complete user data.

In order to ensure the safety of user registration, as a possible implementation, the NCU may perform terminal authentication according to the complete user data and send a first registration response to the terminal according to a terminal authentication result.

For example, in a case where the authentication result is passing authentication, the first registration response corresponding thereto is successful registration. Alternatively, in a case where the authentication result is a failure of authentication, the first registration response corresponding thereto is unsuccessful registration. Of course, when the authentication result is the failure of authentication, the first registration response may further carry information such as a reason for the failure of authentication, which is not limited here.

In the present embodiment, when the NCU performs terminal authentication, centered on user data, it may adopt a unified data model and provide a unified authentication manner and unified user data management.

Based on this, in the present embodiment, after the complete user data is received by the NCU, the complete user data may be saved in digital user equipment (DUE), wherein the DUE corresponds to the terminal. That is to say, the NCU may perform modeling and management on the terminal using the unified digital UE (DUE), and provide the unified authentication manner and unified user data management, thus guaranteeing the continuity of services.

In an implementation, creating timing of the DUE corresponding to the terminal may be at the time of receiving the first registration request by the NCU, or at the time of receiving the complete user data sent by the NDU, which is not limited here.

In Implementation 1, performing user registration based on the complete user data reinforces a user service design concept, and dynamically constructs the user-level DUE in the NCU, accompanied by the PUE; and signal processing and management are carried out based on users, which can provide capabilities to the outside centering around the data and avoid the problem of data inconsistency. Besides, due to the fact that DUE data aggregation only requires one copy, the amount of duplicate data is reduced, which can solve the problems of storage resource waste and high network resource overhead caused by multiple NFs storing data separately in the related art, thereby improving overall performance.

In addition, the DUE has the capability to drive Al and/or machine learning (ML), and can further reduce data collection, lower the overhead of network service AI/ML, and empower Al/ML evolution.

### Implementation 2

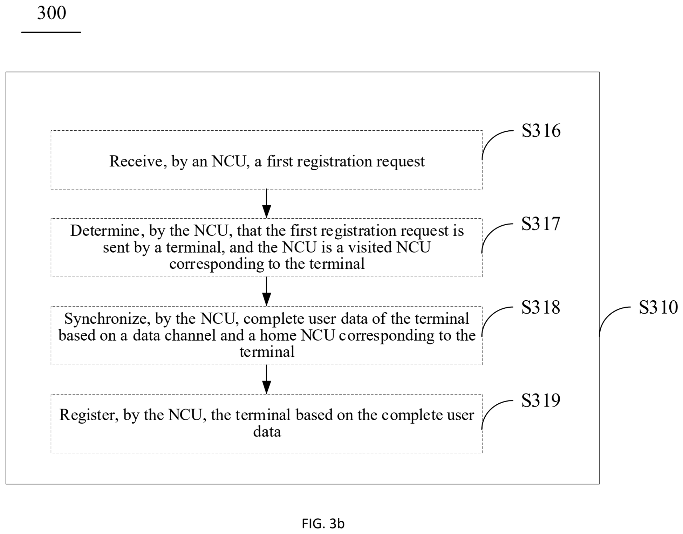

Assuming that a user initiates a registration flow at a visited place, then the first network element includes the NDU, and the process that the NCU communicates with the first network element may include S316 to S319 shown in FIG. 3b as follows.

S316, the NCU receives a first registration request.

The first registration request may carry, but is not limited to, a registration type (e.g., initial registration, periodic position update, etc.), capability information of a terminal (e.g., positioning capability of the terminal, communication-sensing integration capability, VoNR capability, etc.), position information of the terminal, a terminal identification, etc.

S317, the NCU determines that the first registration request is sent by a terminal, and the NCU is a visited NCU corresponding to the terminal.

The NCU may determine a sender of the first registration request according to the first registration request or a terminal access manner, as well as determine whether the NCU is a home NCU (H-NCU) or the visited NCU (V-NCU) of the terminal, so as to ensure smooth execution of the subsequent registration flow.

It will be appreciated that, when the NCU is the V-NCU, the terminal is in a roaming scenario.

S318, the NCU synchronizes complete user data of the terminal based on a data channel and the home NCU corresponding to the terminal.

For example, the V-NCU sends a second registration request to the H-NCU, and correspondingly, after receiving the second registration request, the N-NCU may return the complete user data of the terminal to the V-NCU, such as at least one of terminal-related core data (e.g., user subscription data, and policy data), network data or computing power data.

In the present embodiment, after receiving the complete user data, the V-NCU may save the complete user data as copy data.

Of course, as a possible implementation, similar to aforementioned Implementation 1, a user instance of DUE may further be created in the V-NCU, to be used for saving the copy data of the terminal, such as the complete user data. Reference may be made to relevant descriptions in aforementioned Implementation 1 for an implementation process of the DUE, which is not repeated here.

It will be appreciated that, for future aerospace networks, there are many challenges such as high latency and fast mobility. For example, LEO satellites have a relative motion speed to the ground of up to 7.56 Km/s, and each satellite only serves users for minutes, resulting in frequent switchover. However, in Implementation 2, based on synchronization of master and copy data, an enhanced mobility management manner can be achieved, thereby simplifying flows, and improving the reliability of communication flows such as user registration. The complete user data saved in the H-NCU is called the master data, while the complete user data saved in the V-NCU is called the copy data.

S319, the NCU registers the terminal based on the complete user data.

In order to ensure the safety of terminal registration, as a possible implementation, the NCU may perform terminal authentication according to the complete user data and send a first registration response to the terminal according to a terminal authentication result. For example, in a case where the authentication result is passing authentication, the first registration response corresponding thereto is successful registration. Alternatively, in a case where the authentication result is a failure of authentication, the first registration response corresponding thereto is unsuccessful registration. Of course, the first registration response may further carry information such as a reason for the failure of authentication, which is not limited here.

In Implementation 2, under an extremely simple communication network architecture, through rapid synchronization of the master and copy data of users of DUE, the number of messages in the user registration flow can be reduced, and the communication flow is shortened.

### Implementation 3

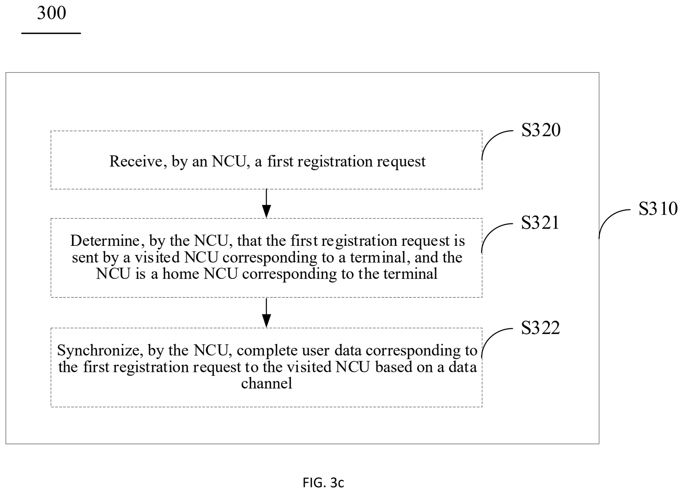

Assuming that a user initiates a registration flow at a visited place, then the first network element includes the NDU, and the process that the NCU communicates with the first network element may include S320 to S322 shown in FIG. 3c as follows.

S320, the NCU receives a first registration request.

The first registration request may carry, but is not limited to, a registration type (e.g., initial registration, periodic position update, etc.), capability information of a terminal (e.g., positioning capability of the terminal, communication-sensing integration capability, VoNR capability, etc.), position information of the terminal, a terminal identification, etc.

S321, the NCU determines that the first registration request is sent by a visited NCU corresponding to the terminal, and the NCU is a home NCU corresponding to the terminal.

The NCU may determine a sender of the first registration request according to the first registration request or a terminal access manner, as well as determine whether the NCU is the home NCU (H-NCU) or a visited NCU (V-NCU) of the terminal, so as to ensure smooth execution of the subsequent registration flow.

It will be appreciated that, when the first registration request is sent by the V-NCU, the terminal is in a roaming scenario.

S322, the NCU synchronizes complete user data corresponding to the first registration request to the visited NCU based on a data channel.

Of course, if the NCU finds that there is no complete user data corresponding to the first registration request locally after acquiring the first registration request, then the NCU may send a data acquiring request to the NDU to acquire the complete user data and synchronize the complete user data to the visited NCU.

Furthermore, similar to aforementioned Implementation 1, when the home NCU locally saves the complete user data, it may save the complete user data in DUE corresponding to the terminal, thereby ensuring the provision of a unified authentication manner and unified user data management for different users, and guaranteeing the continuity of services. Reference may be made to relevant descriptions in aforementioned Implementation 1 for an implementation process of the DUE, which is not repeated here.

Correspondingly, after receiving the complete user data, the V-NCU may save the complete user data in the DUE as copy data of the terminal, and feed a first registration response back to the terminal after performing terminal authentication based on the complete user data. Reference may be made to relevant descriptions in aforementioned Implementation 2 for achieving of the process, which is not repeated here.

Similar to aforementioned Implementation 2, under an extremely simple communication network architecture, in Implementation 3, through rapid synchronization of master and copy data of users of the DUE, the number of messages in the user registration flow can be reduced, and the communication flow is shortened.

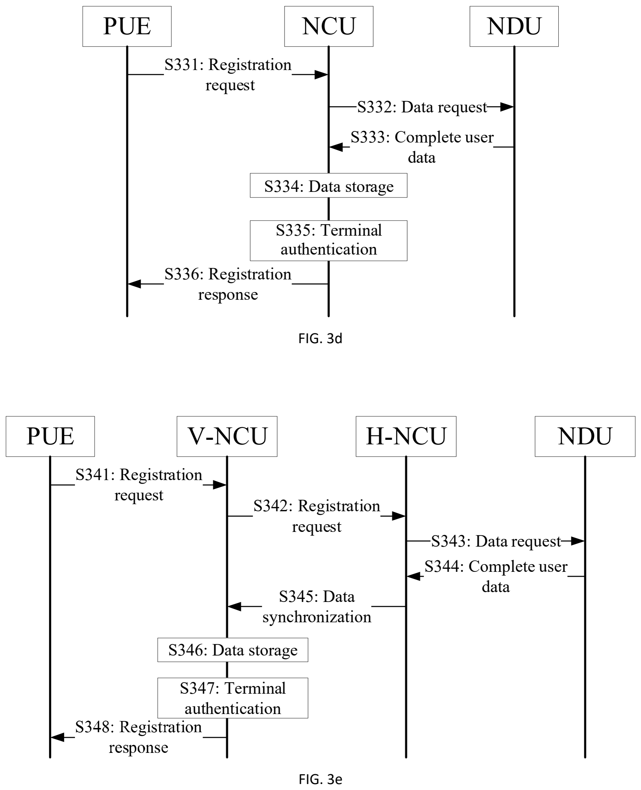

Further, on the basis of the descriptions of the aforementioned method embodiment 300, a network element interaction flow involved in the aforementioned registration flow is exemplarily described below in combination with FIG. 3d and FIG. 3e as follows.

### Example 1

Assuming that a terminal (PUE) initiates a registration flow at a home, then its implementation process may include S331 to S336 shown in FIG. 3d as follows.

S331, the PUE sends a first registration request to an NCU.

S332, after receiving the first registration request, the NCU sends a first data request to an NDU according to the first registration request so as to request complete user data.

S333, after receiving the first data request, the NDU sends the complete user data to the NCU based on a data channel.

S334, the NCU creates a user instance of DUE to store the complete user data.

S335, the NCU performs terminal authentication on the terminal according to the complete user data.

S336, the NCU sends a first registration response to the terminal according to a terminal authentication result.

### Example 2

Assuming that a terminal initiates a registration flow at a visited place, then its implementation process may include S341 to S348 shown in FIG. 3e as follows.

S341, PUE sends a first registration request to a V-NCU at the visited place.

S342, the V-NCU sends a second registration request to an H-NCU according to the first registration request so as to request synchronization of complete user data.

S343, after receiving the second registration request, if there is no complete user data corresponding to the second registration request locally, then the H-NCU sends a first data request to an NDU to acquire the complete user data.

In an implementation, if the H-NCU determines that the complete user data corresponding to the second registration request is stored locally, then the complete user data is directly synchronized to the V-NCU based on DUE.

S344, after receiving the first data request, the NDU sends the complete user data to the H-NCU based on a data channel.

S345, after receiving the complete user data, the H-NCU sends the complete user data to the V-NCU based on the data channel.

S346, the V-NCU creates a user instance of the DUE to store copy data of a user, namely the complete user data.

S347, the V-NCU performs terminal authentication on the terminal according to the complete user data.

S348, the V-NCU sends a first registration response to the terminal according to an authentication result.

It will be appreciated that, the implementation processes of Example 1 and Example 2 may include, but are not limited to, the aforementioned steps, and the implementation processes may refer to the relevant descriptions in the aforementioned method embodiment 300, and achieve the same or corresponding technical effects, which is omitted here to avoid repetition.

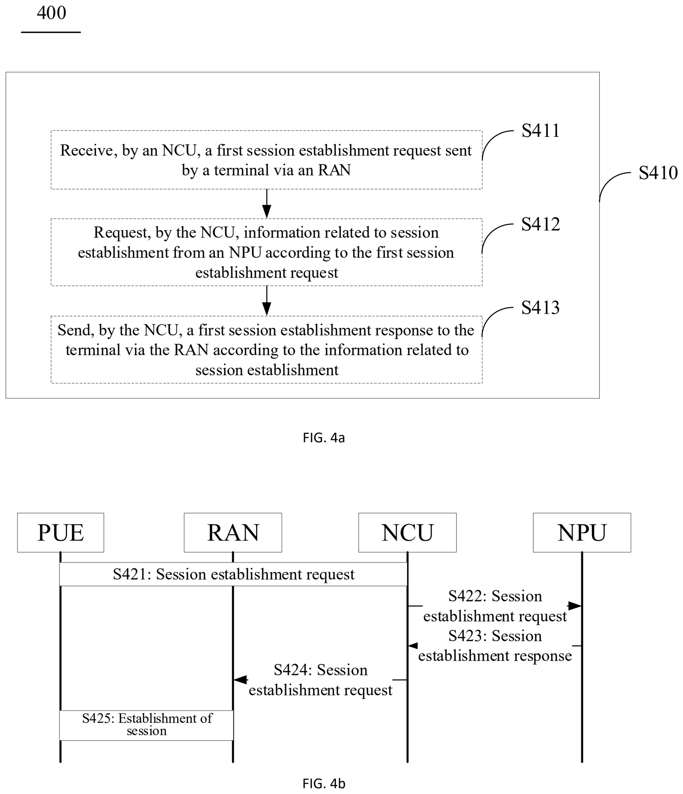

FIG. 4a shows a schematic flowchart of a communication method 400 provided by an embodiment of the present application. The method may be performed by an NCU. In other words, the method 400 may be performed by software or hardware installed in the NCU. As shown in FIG. 4a, the method 400 may include the following steps.

S410, the NCU communicates with a first network element.

The NCU is configured to provide a function related to network control, the first network element includes at least one of a network packet unit (NPU), a network data unit (NDU) or a network intelligent unit (NIU), the NPU is configured to provide a function related to network packet forwarding, the NDU is configured to provide a function related to data management, and the NIU is configured to provide a function related to endogenous intelligence.

It will be appreciated that, an implementation process of S410 may refer to the relevant descriptions in the method embodiment 300 and/or the communication network architecture, besides, as a possible implementation, when the NCU communicates with the first network element to achieve the communication purpose of session establishment, the first network element may include the NPU, and correspondingly, its implementation process may include S411 to S413 shown in FIG. 4a as follows.

S411, the NCU receives a first session establishment request sent by a terminal via a radio access network (RAN).

That is, when the terminal sends the first session establishment request, the first session establishment request may be sent to the NCU via the RAN.

S412, the NCU requests information related to session establishment from the NPU according to the first session establishment request.

The NCU may determine an appropriate NPU from at least one NPU according to complete user data of the terminal, and request the information related to session establishment from the NPU. For example, the NCU applies to the NPU for establishment of a bearer, setup of forwarding rules, quality of service (QOS) policy information, and the like.

In an implementation, the process that the NCU requests the information related to session establishment from the NPU according to the first session establishment request (may also be referred to as a target session establishment request) may include: sending a second session establishment request to the NPU according to the first session establishment request; determining the information related to session establishment by the NPU after receiving the second session establishment request, such as establishment of a bearer, setup of forwarding rules, and QOS policy information; and sending a second session establishment response to a second NCU, wherein the second session establishment response carries the information related to session establishment.

S413, the NCU sends a first session establishment response to the terminal via the RAN according to the information related to session establishment.

The NCU may send the first session establishment response which may carry the QOS policy information and the like to the RAN according to the information related to session establishment, and then the RAN applies for radio resources, bearer establishment and the like according to the QOS policy information and the like, so as to achieve the purpose of session establishment at the terminal.

In the present embodiment, during session establishment based on the communication network architecture provided in the present application, the interaction flow between network elements is effectively simplified, for example, the number of interactions between the network elements (i.e., the number of message steps) is greatly reduced.

That is to say, in the present embodiment, through network element aggregation and reconstruction, especially high-dependency network element aggregation, information interaction between the original network elements is changed to processing of micro services in network units, and thus the session establishment flow is simplified. For example, in the relevant communication network architecture, the flows of session processing and policy acquisition that involve frequent interactions between an AMF, an SMF, and a PCF are implemented internally by the same NCU in the communication network architecture provided in the present application, and usually do not involve external interactions. They only perform necessary context delivery and other operations with other NCUs as needed in scenarios such as interoperability or mobility. After calculation, the number of steps involved in the session establishment flow implemented based on the communication network architecture in the present application has been reduced from the original 20+ in the related art to 4+, and the number of message interactions is greatly reduced, achieving simplification of the flows and ensuring the reliability and high efficiency of the communication process.

Further, on the basis of the descriptions of the aforementioned method embodiment 400, an interaction process between various network elements in the session establishment flow is described below in combination with Example 3 and FIG. 4b as follows.

S421, a terminal sends a first session establishment request to an NCU through an RAN.

S422, the NCU sends a second session establishment request to an NPU according to the first session establishment request, so as to apply for establishment of a bearer, setup of forwarding rules, QOS policy information and the like.

S423, the NPU returns a second session establishment response to the NCU according to the second session establishment request, such as a response to establishment of the bearer.

S424, the NCU sends a third session establishment request, which carries a first session establishment response sent to the terminal, to the RAN according to the second session establishment response so as to initiate establishment of a session, wherein the third session establishment request carries QOS policy information and the like.

S425, the RAN applies for radio resources, bearer establishment and the like according to requirements such as the QOS policy carried in the third session establishment request, and forwards the first session establishment response to the terminal.

It will be appreciated that, the implementation process of this example may include, but is not limited to, the aforementioned steps, and the implementation process may refer to the relevant descriptions in the aforementioned method embodiment 400, and achieve the same or corresponding technical effects, which is omitted here to avoid repetition.

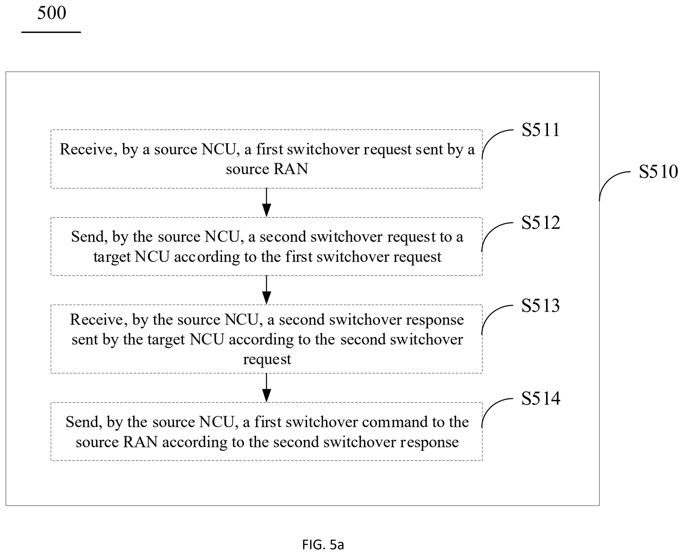

FIG. 5a shows a schematic flowchart of a communication method 500 provided by an embodiment of the present application. The method 500 may be performed by an NCU. In other words, the method 500 may be performed by software or hardware installed in the NCU. As shown in FIG. 5a, the method 500 may include the following steps.

S510, communication with a first network element is performed.

The NCU is configured to provide a function related to network control, the first network element includes at least one of an NPU, an NDU or an NIU, the NPU is configured to provide a function related to network packet forwarding, the NDU is configured to provide a function related to data management, and the NIU is configured to provide a function related to endogenous intelligence.

It will be appreciated that, an implementation process of S510 may refer to the relevant descriptions in the method embodiment 300, the method embodiment 400 and the aforementioned communication network architecture, besides, as a possible implementation, when the NCU communicates with the first network element to achieve the communication purpose of cross-NCU switchover, the first network element may include the NPU, and the NPU includes a source NPU and a target NPU. Correspondingly, if the NCU is a source NCU, then its implementation process may include S511 to S514 shown in FIG. 5a as follows.

S511, the source NCU receives a first switchover request sent by a source RAN.

The source RAN determines whether to initiate a switchover flow according to monitoring on a terminal access signal (such as uplink and downlink signals), and if the source RAN determines to initiate the switchover flow when the terminal access signal has poor signal quality, the first switchover request is sent to the source NCU.

Of course, after receiving the first switchover request, the source NCU may judge whether cross-NCU switchover is needed according to a position of a terminal, communication quality of the terminal and the like, and if it is needed, a target NCU may be determined according to complete user data of the terminal and the like, and the switchover flow is initiated, namely subsequent S512.

S512, the source NCU sends a second switchover request to the target NCU according to the first switchover request, wherein the second switchover request is used for requesting the terminal to be switched from the source NCU to the target NCU.

Correspondingly, after receiving the second switchover request, the target NCU may determine an appropriate NPU according to the second switchover request, namely the target NPU. Thus, the target NCU sends a session establishment request to the target NPU, the target NPU determines information related to session establishment according to the session establishment request, and sends the information related to session establishment to the target NCU through a session establishment response, and the target NCU sends a switchover request to a target RAN according to the received session establishment response, and sends, when receiving a switchover response sent by the target RAN, a second switchover response to the source NCU according to the switchover response, namely S513 that the source NCU receives the second switchover response sent by the target NCU according to the second switchover request.

S513, the source NCU receives the second switchover response sent by the target NCU according to the second switchover request.

S514, the source NCU sends a first switchover command to the source RAN according to the second switchover response.

Correspondingly, after receiving the first switchover command, the source RAN may send a switchover command to the terminal, the terminal is switched to the target RAN from the source RAN according to the switchover command, after switchover is completed, the target RAN sends a switchover completing notification to the target NCU, next, the target NCU sends the switchover completing notification to the source NCU, the source NCU initiates a bearer release request to the source NPU so as to release data forwarding resources and the like which are originally applied by the S-NPU, finally, the source NPU returns a bearer release response, and thus the cross-NCU switchover flow is completed.

Of course, it can be seen from the aforementioned switchover flow that, during cross-NCU switchover, since the number of network elements and the number of interfaces in the communication network architecture are greatly reduced, the number of interaction messages involved in the switchover process is also greatly reduced, thereby simplifying the switchover flow and then ensuring the high efficiency of the communication process. For example, due to the reduction of the number of network elements and the interfaces, through calculation, the number of switchover establishment steps is reduced from original 30+ to 14+, and the number of message interactions is greatly reduced, achieving simplification of the flow.

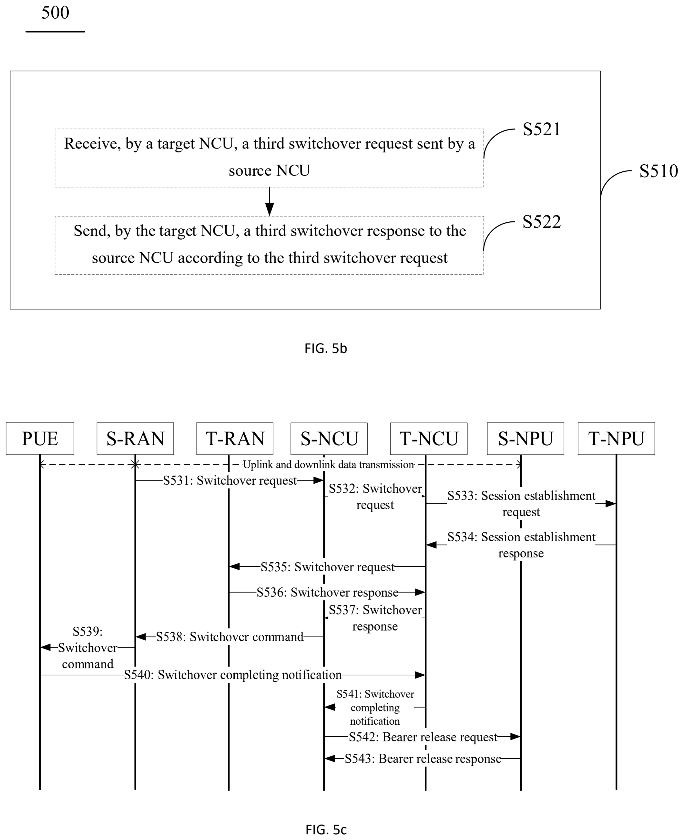

Further, as another possible implementation, if the NCU serves as the target NCU in the cross-NCU switchover process, then its implementation process may include S521 to S522 shown in FIG. 5b as follows.

S521, the target NCU receives a third switchover request sent by the source NCU, wherein the third switchover request is used for requesting the terminal to be switched from the source NCU to the target NCU.

S522, the target NCU sends a third switchover response to the source NCU according to the third switchover request.

In one embodiment of the present application, the process that the target NCU sends the third switchover response to the source NCU according to the third switchover request may include: determining the target NPU according to the third switchover request, and sending a third session establishment request to the target NPU; receiving a third session establishment response sent by the target NPU; sending a fourth switchover request to the target RAN according to the third session establishment response; receiving a fourth switchover response sent by the target RAN according to the fourth switchover request; and sending the third switchover response to the source NCU according to the fourth switchover response.

It will be appreciated that, the switchover flow in which cross-NCU switchover is achieved with the NCU as the target NCU may refer to the relevant descriptions in aforementioned S511 to S514, and achieve the same or corresponding technical effects, which is omitted here to avoid repetition.

Furthermore, this method embodiment only presents the cross-NCU switchover flow, but during actual communication, intra-RAN switchover, same-NCU switchover and the like are also possible, and their switchover processes are similar to the aforementioned cross-NCU switchover flow, which are omitted here.

Further, on the basis of the descriptions of the aforementioned method embodiment 500, an interaction process between various network elements in the cross-NCU switchover flow is described below in combination with FIG. 5c and Example 4 as follows.

S531, a source RAN (S-RAN) determines to initiate switchover according to monitoring on PUE signals, and then the S-RAN sends a first switchover request to a source NCU (S-NCU) to initiate a switchover flow.

S532, the S-NCU determines that cross-NCU switchover is needed according to the first switchover request, and then may send a second switchover request to a target NCU (T-NCU) according to the first switchover request.

S533, the T-NCU selects an appropriate target NPU (T-NPU) according to the second switchover request, and sends a third session establishment request to the T-NPU, such as a bearer establishment request.

S534, after successfully establishing a bearer channel according to the third session establishment request, the T-NPU sends a third session establishment response to the T-NCU, wherein the third session establishment response may carry information related to session establishment, such as bearer information.

S535, the T-NCU sends a third switchover request to a target RAN (T-RAN) according to the third session establishment response.

S536, the T-RAN sends a third switchover response to the T-NCU according to the third switchover request.

S537, the T-NCU returns a second switchover response to the S-NCU according to the third switchover response.

S538, the S-NCU sends a first switchover command to the S-RAN according to the second switchover response.

S539, the S-RAN sends a second switchover command to PUE according to the first switchover command.

S540, after the PUE is switched to the T-RAN according to the second switchover command, the T-RAN returns a switchover completing notification to the T-NCU.

S541, the T-NCU returns the switchover completing notification to the S-NCU according to the received switchover completing notification.

S542, the S-NCU initiates a bearer release request to an S-NPU to release data forwarding resources and the like which are originally applied by the S-NPU.

S543, the S-NPU returns a bearer release response.

It will be appreciated that, the implementation process of cross-NCU switchover in this example may include, but is not limited to, the aforementioned steps, and the implementation process may refer to the relevant descriptions in the aforementioned method embodiment 500, and achieve the same or corresponding technical effects, which is omitted here to avoid repetition.

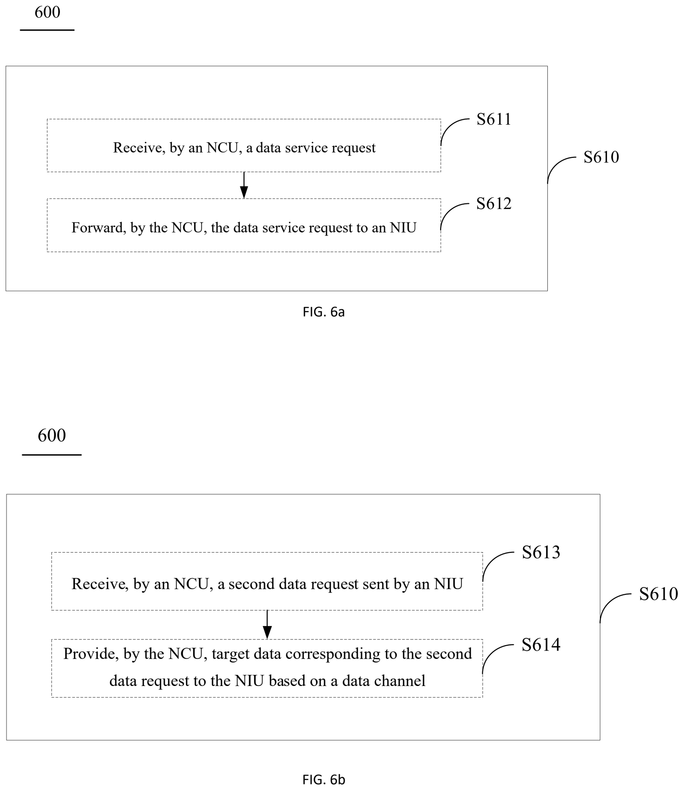

FIG. 6a shows a schematic flowchart of a communication method 600 provided by an embodiment of the present application. The method may be performed by an NCU. In other words, the method 600 may be performed by software or hardware installed in the NCU. As shown in FIG. 6a, the method 600 may include the following steps.

S610, communication with a first network element is performed.

The NCU is configured to provide a function related to network control, the first network element includes at least one of an NPU, an NDU or an NIU, the NPU is configured to provide a function related to network packet forwarding, the NDU is configured to provide a function related to data management, and the NIU is configured to provide a function related to endogenous intelligence.

It will be appreciated that, an implementation process of S610 may refer to the relevant descriptions in the method embodiments 300 to 500 and the communication network architecture, besides, referring to FIG. 6a again, as a possible implementation, assuming that the NCU communicates with the first network element to achieve the communication purpose of data analysis services, the first network element may include the NIU.

Based on this, if the NCU serves as a network entrance, then the process that the NCU communicates with the first network element to achieve the data analysis services may include S611 to S612 shown in FIG. 6a as follows.

S611, the NCU receives a data service request.

The data service request may be, but not limited to, sent by an application function (AF), so as to be used for requesting user distribution data, network state data and the like. That is, in the present embodiment, the NCU is equivalent to a network entrance and configured to receive requests sent by the AF and the like and forward the received requests to corresponding network elements, such as the NIU in subsequent S612.

S612, the NCU forwards the data service request to the NIU.

Of course, after receiving the data request, the NIU may send a third data acquiring request to the NDU so as to acquire target data (e.g., network data, computing power data, core network data and other original data) for the data analysis services, and then return the target data to the NCU, and/or, the NIU performs processing and analysis on the received target data using corresponding intelligent algorithms and models to obtain a data processing result, so as to return the data processing result corresponding to the target data to the NCU, and then the NCU is used to forward the received target data or the data processing result corresponding to the target data to the AF.

Further, as another possible implementation, if relevant data for the NIU to perform the data analysis services is saved in the NCU, such as static data (terminal position information, terminal state information, etc.), then the process that the NCU communicates with the first network element may also include S613 to S614 shown in FIG. 6b as follows.

S613, the NCU receives a second data request sent by the NIU.

The second data request may be sent by the NIU after the data service request is received, so as to be used for requesting from the NCU the relevant data for the data analysis services.

S614, the NCU provides target data corresponding to the second data request to the NIU based on a data channel.

Correspondingly, after receiving the target data sent by the NCU, the NIU may perform the data analysis services by integrating the target data with target data sent by the NDU, for example, processing and analysis are performed on the target data using corresponding intelligent algorithms and models.

In the method embodiment, using the NIU can achieve an intelligent plane function in networks, and the NIU is a basic unit for intelligent task processing in the networks. The NIU applies AI/ML to the networks internally to enhance the intelligence of communication networks. In addition to basic load analysis and congestion prediction, it can predict resource deployment and distribution requirements of the NCU and the NPU, analyze service clipping and customization needs, etc., making the networks extremely simple, elastic, and intelligent; and the NIU provides flexible AI/ML network services (AlaaS) to external applications, such as assisting the applications in providing network performance analysis and prediction, performing network routing selection, and configuring service QoS and other services.

Of course, since the number of network elements and the number of interfaces in the communication network architecture are greatly reduced, the number of interaction messages involved in the data analysis service process is also greatly reduced, thereby simplifying the data analysis service flow and then ensuring the high efficiency of the communication process.

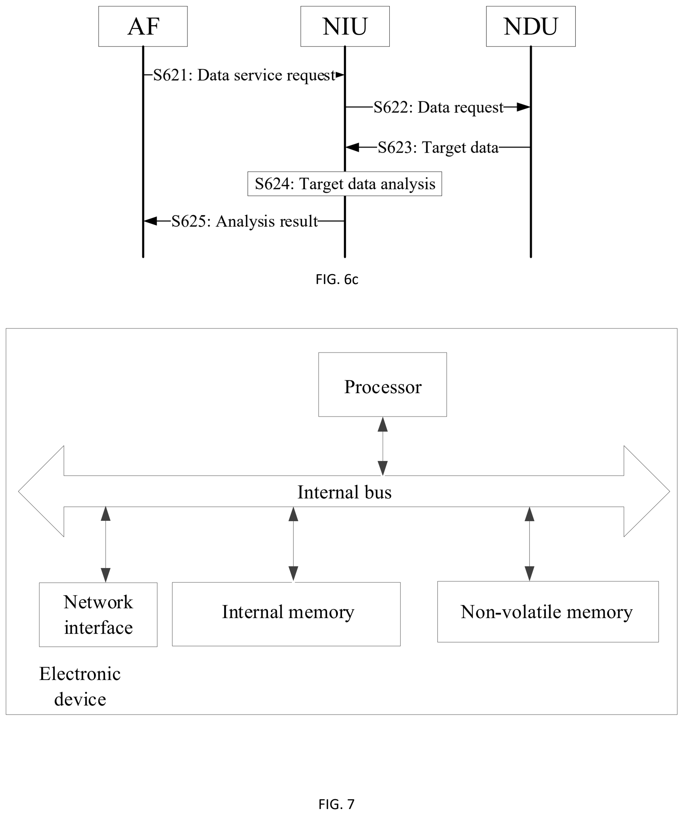

Further, on the basis of the descriptions of the aforementioned method embodiment 600, an interaction process between various network elements in the data analysis service flow is described below in combination with examples and FIG. 6c as follows. It is assumed that the AF does not need signaling interaction with the NIU through the NCU.

S621, the AF sends a data service request to the NIU when it needs to acquire the data analysis services (e.g., user distribution data, network state data, etc.).

In one embodiment of the present application, the NIU may also send a data service request to the NCU serving as the network entrance.

S622, the NIU sends a third data request to the NDU according to the data service request, so as to be used for acquiring original data, such as network data, computing power data and core network data.

S623, the NDU returns target data corresponding to the third data request to the NIU based on a data channel.

S624, the NIU performs processing and analysis on the acquired target data using corresponding intelligent algorithms and models.

S625, the NIU returns the target data or a data processing result corresponding to the target data to the AF.

It will be appreciated that, the implementation process of the data analysis services in this example may include, but is not limited to, the aforementioned steps, and the implementation process may refer to the relevant descriptions in the aforementioned method embodiment 600, and achieve the same or corresponding technical effects, which is omitted here to avoid repetition.

Further, in addition to the aforementioned communication network architecture and method embodiments 300 to 600 implemented based on the communication network architecture provided in the present application, the communication network architecture shown in FIG. 1 provided by the present application can also achieve the following technical effects.
(1) Solving signaling storms: by adopting DUE, a standard signaling interface between NFs is replaced by an internal data access interface of the DUE, eliminating the signaling storms of the multiple NFs interacting with each other.
(2) True grayscale upgrade: single DUE deployment and simple grayscale upgrade is not dependent on internal implementation of the DUE, but just a replacement process of batches of DUE.
(3) New features go live N times faster: no need to upgrade N related NFs when rolling out new features.
(4) Easy positioning of faults and easy maintenance of systems: the multiple NFs interact and depend on each other, and once a fault occurs, it is prone to spreading, difficult to position the source, and slow to solve; and the single DUE method makes it easy to detect the source of faults and facilitates fault isolation and repair.

An exemplary embodiment of the present application further provides a communication apparatus. The communication apparatus is applied to an NCU and may include a first communication module which is configured to communicate with a first network element. The NCU is configured to provide a function related to network control, the first network element includes at least one of a network packet unit (NPU), a network data unit (NDU) or a network intelligent unit (NIU), the NPU is configured to provide a function related to network packet forwarding, the NDU is configured to provide a function related to data management, and the NIU is configured to provide a function related to endogenous intelligence.

In one embodiment of the present application, the first network element includes the NDU. The first communication module communicating with the first network element includes: receiving a first registration request; determining that the first registration request is sent by a terminal, and the NCU is a home NCU corresponding to the terminal; sending a first data request to the NDU according to the first registration request; receiving complete user data sent by the NDU based on a data channel; and registering the terminal based on the complete user data.

In one embodiment of the present application, after the first registration request is received, the first communication module communicating with the first network element further includes: determining that the first registration request is sent by a terminal, and the NCU is a visited NCU corresponding to the terminal; synchronizing complete user data of the terminal based on the data channel and the home NCU corresponding to the terminal; and registering the terminal based on the complete user data.

In one embodiment of the present application, the first communication module registering the terminal based on the complete user data includes: performing terminal authentication according to the complete user data; and sending a first registration response to the terminal according to a terminal authentication result; wherein the complete user data is saved in digital user equipment (DUE), and the DUE corresponds to the terminal.

In one embodiment of the present application, after the first registration request is received, the first communication module communicating with the first network element further includes: determining that the first registration request is sent by a visited NCU corresponding to the terminal, and the NCU is the home NCU corresponding to the terminal; and synchronizing the complete user data corresponding to the first registration request to the visited NCU based on the data channel.

In one embodiment of the present application, the complete user data includes at least one of terminal-related core data, network data or computing power data.

In one embodiment of the present application, the first network element includes the NPU, and the first communication module communicating with the first network element includes: receiving a first session establishment request sent by a terminal via an RAN; requesting information related to session establishment from the NPU according to the first session establishment request; and sending a first session establishment response to the terminal via the RAN according to the information related to session establishment.

In one embodiment of the present application, the first communication module requesting the information related to session establishment from the NPU according to the first session establishment request includes: sending a second session establishment request to the NPU according to the first session establishment request; and receiving a second session establishment response sent by the NPU according to the second session establishment request, wherein the second session establishment response carries the information related to session establishment.

In one embodiment of the present application, the first network element includes the NPU, the NPU includes a source NPU and a target NPU, and the NCU is a source NCU; and the first communication module communicating with the first network element includes: receiving a first switchover request sent by a source RAN; sending a second switchover request to a target NCU according to the first switchover request, wherein the second switchover request is used for requesting a terminal to be switched from the source NCU to the target NCU; receiving a second switchover response sent by the target NCU according to the second switchover request; and sending a first switchover command to the source RAN according to the second switchover response.

In one embodiment of the present application, the first network element includes the NPU, the NPU includes a source NPU and a target NPU, and the NCU is a target NCU; and the first communication module communicating with the first network element includes: receiving a third switchover request sent by a source NCU, wherein the third switchover request is used for requesting a terminal to be switched from the source NCU to the target NCU; and sending a third switchover response to the source NCU according to the third switchover request.

In one embodiment of the present application, the first communication module sending the third switchover response to the source NCU according to the third switchover request includes: determining the target NPU according to the third switchover request, and sending a third session establishment request to the target NPU; receiving a third session establishment response sent by the target NPU; sending a fourth switchover request to a target RAN according to the third session establishment response;
receiving a fourth switchover response sent by the target RAN according to the fourth switchover request; and sending the third switchover response to the source NCU according to the fourth switchover response.

In one embodiment of the present application, the first network element includes the NIU, and the first communication module communicating with the first network element includes at least one of: receiving a data service request, and forwarding the data service request to the NIU; or receiving a second data request sent by the NIU, and providing target data corresponding to the second data request to the NIU based on a data channel.

In one embodiment of the present application, the NCU supports at least one network access manner, and different network access manners correspond to different network adaptors.

In one embodiment of the present application, the network adaptors are achieved through components or micro services.

An embodiment of the present application further provides a communication apparatus. The communication apparatus is applied to an NDU and may include a second communication module which is configured to communicate with a second network element based on a data channel. The NDU is configured to provide a function related to data management, the second network element includes at least one of a network control unit (NCU) or a network intelligent unit (NIU), the NCU is configured to provide a function related to network control, and the NIU is configured to provide a function related to endogenous intelligence.

In one embodiment of the present application, the second network element includes the NCU, and the second communication module communicating with the second network element based on the data channel includes: receiving a first data request sent by the NCU; and sending complete user data corresponding to the first data request to the NCU based on the data channel.

In one embodiment of the present application, the second network element includes the NIU, and the second communication module communicating with the second network element based on the data channel includes: receiving a third data request sent by the NIU; and sending target data corresponding to the third data request to the NIU based on the data channel.

An embodiment of the present application further provides a communication apparatus. The communication apparatus is applied to an NPU and may include a third communication module which is configured to communicate with a third network element. The NPU is configured to provide a function related to network packet forwarding, and the third network element at least includes a network control unit (NCU).

In one embodiment of the present application, the third network element includes the NCU, and the third communication module communicating with the third network element includes: receiving a target session establishment request sent by the NCU; and sending a target session establishment response to the NCU, wherein the target session establishment response carries information related to session establishment.

An embodiment of the present application further provides a communication apparatus. The communication apparatus is applied to an NIU and may include a fourth communication module which is configured to communicate with a fourth network element. The NIU is configured to provide a function related to endogenous intelligence, the fourth network element includes at least one of a network control unit (NCU) or a network data unit (NDU), the NCU is configured to provide a function related to network control, and the NDU is configured to provide a function related to data management.

In one embodiment of the present application, the fourth network element includes the NCU and/or the NDU, and the fourth communication module communicating with the fourth network element includes: receiving a data service request sent by an application function (AF) or the NCU; requesting target data from the NDU and/or the NCU according to the data service request; and sending the target data and/or a data processing result corresponding to the target data to the AF or the NCU.

The various aforementioned communication apparatuses provided by the embodiments of the present application can perform the methods described in the foregoing method embodiments, and achieve the functions and beneficial effects of the methods described in the foregoing method embodiments, which is omitted here.

FIG. 7 shows a schematic diagram of a hardware structure of an electronic device provided by an embodiment of the present application. Referring to the figure, at the hardware level, the electronic device includes a processor, optionally an internal bus, a network interface, and a memory. The memory may include an internal memory such as a high-speed random-access memory (RAM), or a non-volatile memory such as at least one disk memory. Of course, the electronic device may also include hardware required for other services.

The processor, the network interface, and the memory may be interconnected by the internal bus, which may be an industry standard architecture (ISA) bus, a peripheral component interconnect (PCI) bus, or an extended industry standard architecture (EISA) bus, among others. The bus may be divided into an address bus, a data bus, a control bus, and the like. For ease of illustration, only one bi-directional arrow is shown in the figure, but it does not indicate only one bus or one type of bus.

The memory is configured to store a program. Specifically, the program may include a program code, and the program code includes computer operating instructions. The memory may include an internal memory and a non-volatile memory, and provides instructions and data to the processor.

The processor reads a corresponding computer program from the non-volatile memory into the internal memory and then runs the computer program to form an apparatus for locating a target user at a logical level. The processor executes the program stored in the memory, and is specifically configured to perform the method disclosed in the embodiments shown in FIG. 3a to FIG. 6a and achieve the functions and beneficial effects of various methods described in the foregoing method embodiments, which is omitted here.

The above methods disclosed in the embodiments shown in FIG. 3a to FIG. 6a of the present application may be applied to the processor or implemented by the processor. The processor may be an integrated circuit chip having signal processing capabilities. During an implementation process, all the steps of the above method may be completed by an integrated logic circuit of hardware or an instruction in the form of software in the processor. The above processor may be a general-purpose processor, including a central processing unit (CPU), a network processor (NP) and the like. The processor may also be a digital signal processor (DSP), an application specific integrated circuit (ASIC), a field-programmable gate array (FPGA) or other programmable logic devices, discrete gate or transistor logic devices, and discrete hardware components. The various methods, steps, and logic block diagrams disclosed in the embodiments of the present application may be implemented or performed. The general-purpose processor may be a microprocessor, or the processor may also be any conventional processor, etc. The steps of the method disclosed in conjunction with the embodiments of the present application may be directly embodied to be executed and completed by a hardware decoding processor, or may be executed and completed through a combination of hardware and software modules in the decoding processor. The software module may be located in a mature storage medium in the art, such as a random access memory, a flash memory, a read-only memory, a programmable read-only memory, an electrically erasable programmable memory, and a register. The storage medium is located in the memory. The processor reads information in the memory and completes the steps of the above method in combination with hardware thereof.

The electronic device can also perform the methods described in the foregoing method embodiments, and achieve the functions and beneficial effects of the methods described in the foregoing method embodiments, which is omitted here.

Of course, in addition to the software implementations, the electronic device of the present application does not exclude other implementations, such as logic devices or combinations of software and hardware, that is, an execution body of the following process flows is not limited to each logic unit, but may be hardware or logic devices.

An embodiment of the present application further proposes a computer-readable storage medium. The computer-readable storage medium stores one or more programs that, when executed by an electronic device including a plurality of application programs, cause the electronic device to perform the methods disclosed in the embodiments shown in FIG. 3a to FIG. 6b and to achieve the functions and beneficial effects of the methods described in the foregoing method embodiments, which is omitted here.

The computer-readable storage medium includes: a read-only memory (ROM), a random access memory (RAM), a magnetic disk or an optical disk, etc.

Further, an embodiment of the present application further provides a computer program product. The computer program product includes a computer program stored on a non-transitory computer-readable storage medium, the computer program includes program instructions, and the program instructions, when executed by a computer, implement the following flow: the methods disclosed in the embodiments shown in FIG. 3a to FIG. 6a, and achieve the functions and beneficial effects of the methods described in the foregoing method embodiments, which is omitted here.

In total, the above is merely preferred embodiments of the present application and is not intended to limit the protection scope of the present application. Any modifications, equivalent replacements, improvements, etc. made within the spirit and principle of the present application shall fall within the scope of protection of the present application.

The system, apparatus, module or unit illustrated in the above embodiments may be specifically embodied by a computer chip or entity, or by a product having a certain function. A typical implementation device is a computer. In particular, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

The computer-readable medium includes permanent and non-permanent, and removable and non-removable media, and may achieve information storage through any method or technology. The information may be computer-readable instructions, data structures, modules of programs, or other data. Examples of the computer storage medium include, but are not limited to, a phase-change random access memory (PRAM), a static random access memory (SRAM), a dynamic random access memory (DRAM), other types of random access memories (RAM), a read-only memory (ROM), an electrically erasable programmable read-only memory (EEPROM), a flash memory or other memory technologies, a compact disc read-only memory (CD-ROM), a digital versatile disc (DVD) or other optical storage and magnetic cassette tape, magnetic-tape magnetic-disk storage or other magnetic storage devices or any other non-transmission media, and may be used to store information that can be accessed by a computing device. According to the definition herein, the computer-readable medium does not include transitory media, such as modulated data signals and carriers.

It should further be noted that, the terms "include", "comprise" or any other variants thereof are intended to cover non-exclusive inclusion, so that a process, method, article or device including a series of elements not only includes those elements, but also includes other elements not clearly listed, or also includes elements inherent to this process, method, article or device. Without further restrictions, the elements defined by the sentence "including a..." do not exclude that there are other same elements in the process, method, article or device including the elements.

The various embodiments in this specification are described in a progressive manner, and the same or similar parts between the various embodiments can be referred to each other. Each embodiment focuses on contents different from other embodiments. In particular, as for the system embodiments, as they are basically similar to the method embodiment, the description is relatively simple. As for related parts, please refer to part of the description in the method embodiments.

## Claims

1. A communication method, performed by a network control unit (NCU), comprising:
communicating with a first network element; wherein
the NCU is configured to provide a function related to network control, the first network element comprises at least one of a network packet unit (NPU), a network data unit (NDU) and a network intelligent unit (NIU), the NPU is configured to provide a function related to network packet forwarding, the NDU is configured to provide a function related to data management, and the NIU is configured to provide a function related to endogenous intelligence.

2. The method according to claim 1, wherein the first network element comprises the NDU, and communicating with the first network element comprises:
receiving a first registration request;
determining that the first registration request is sent by a terminal, and the NCU is a home NCU corresponding to the terminal;
sending a first data request to the NDU according to the first registration request;
receiving complete user data sent by the NDU based on a data channel; and
registering the terminal based on the complete user data.

3. The method according to claim 2, wherein after receiving the first registration request, communicating with the first network element further comprises:
determining that the first registration request is sent by a terminal, and the NCU is a visited NCU corresponding to the terminal;
synchronizing complete user data of the terminal based on the data channel and the home NCU corresponding to the terminal; and
registering the terminal based on the complete user data.

4. The method according to claim 2 or 3, wherein registering the terminal based on the complete user data comprises:
performing terminal authentication according to the complete user data; and
sending a first registration response to the terminal according to a terminal authentication result; wherein
the complete user data is saved in digital user equipment (DUE), and the DUE corresponds to the terminal.

5. The method according to claim 2, wherein after receiving the first registration request, communicating with the first network element further comprises:
determining that the first registration request is sent by a visited NCU corresponding to the terminal, and the NCU is the home NCU corresponding to the terminal; and
synchronizing the complete user data corresponding to the first registration request to the visited NCU based on the data channel.

6. The method according to any one of claims 2 to 5, wherein the complete user data comprises at least one of terminal-related core data, network data and computing power data.

7. The method according to claim 1, wherein the first network element comprises the NPU, and communicating with the first network element comprises:
receiving a first session establishment request sent by a terminal via an RAN;
requesting information related to session establishment from the NPU according to the first session establishment request; and
sending a first session establishment response to the terminal via the RAN according to the information related to session establishment.

8. The method according to claim 7, wherein requesting the information related to session establishment from the NPU according to the first session establishment request comprises:
sending a second session establishment request to the NPU according to the first session establishment request; and
receiving a second session establishment response sent by the NPU according to the second session establishment request, wherein the second session establishment response carries the information related to session establishment.

9. The method according to claim 1, wherein the first network element comprises the NPU, the NPU comprises a source NPU and a target NPU, and the NCU is a source NCU; and
communicating with the first network element comprises:
receiving a first switchover request sent by a source RAN;
sending a second switchover request to a target NCU according to the first switchover request, wherein the second switchover request is used for requesting a terminal to be switched from the source NCU to the target NCU;
receiving a second switchover response sent by the target NCU according to the second switchover request; and
sending a first switchover command to the source RAN according to the second switchover response.

10. The method according to claim 1, wherein the first network element comprises the NPU, the NPU comprises a source NPU and a target NPU, and the NCU is a target NCU; and
communicating with the first network element comprises:
receiving a third switchover request sent by a source NCU, wherein the third switchover request is used for requesting a terminal to be switched from the source NCU to the target NCU; and
sending a third switchover response to the source NCU according to the third switchover request.

11. The method according to claim 10, wherein sending the third switchover response to the source NCU according to the third switchover request comprises:
determining the target NPU according to the third switchover request, and sending a third session establishment request to the target NPU;
receiving a third session establishment response sent by the target NPU;
sending a fourth switchover request to a target RAN according to the third session establishment response;
receiving a fourth switchover response sent by the target RAN according to the fourth switchover request; and
sending the third switchover response to the source NCU according to the fourth switchover response.

12. The method according to claim 1, wherein the first network element comprises the NIU, and communicating with the first network element comprises at least one of:
receiving a data service request, and forwarding the data service request to the NIU; or
receiving a second data request sent by the NIU, and providing target data corresponding to the second data request to the NIU based on a data channel.

13. The method according to any one of claims 1 to 12, wherein the NCU supports at least one network access manner, and different network access manners correspond to different network adaptors.

14. The method according to claim 13, wherein the network adaptors are achieved through components or micro services.

15. A communication method, performed by a network data unit (NDU), comprising:
communicating with a second network element based on a data channel; wherein
the NDU is configured to provide a function related to data management, the second network element comprises at least one of a network control unit (NCU) or a network intelligent unit (NIU), the NCU is configured to provide a function related to network control, and the NIU is configured to provide a function related to endogenous intelligence.

16. The method according to claim 15, wherein the second network element comprises the NCU, and communicating with the second network element based on the data channel comprises:
receiving a first data request sent by the NCU; and
sending complete user data corresponding to the first data request to the NCU based on the data channel.

17. The method according to claim 15, wherein the second network element comprises the NIU, and communicating with the second network element based on the data channel comprises:
receiving a third data request sent by the NIU; and
sending target data corresponding to the third data request to the NIU based on the data channel.

18. A communication method, performed by a network packet unit (NPU), comprising:
communicating with a third network element; wherein
the NPU is configured to provide a function related to network packet forwarding, and the third network element at least comprises a network control unit (NCU).

19. The method according to claim 18, wherein the third network element comprises the NCU, and communicating with the third network element comprises:
receiving a target session establishment request sent by the NCU; and
sending a target session establishment response to the NCU, wherein the target session establishment response carries information related to session establishment.

20. A communication method, performed by a network intelligent unit (NIU), comprising:
communicating with a fourth network element; wherein
the NIU is configured to provide a function related to endogenous intelligence, the fourth network element comprises at least one of a network control unit (NCU) or a network data unit (NDU), the NCU is configured to provide a function related to network control, and the NDU is configured to provide a function related to data management.

21. The method according to claim 20, wherein the fourth network element comprises the NCU and/or the NDU, and communicating with the fourth network element comprises:
receiving a data service request sent by an application function (AF) or the NCU;
requesting target data from the NDU and/or the NCU according to the data service request; and
sending the target data and/or a data processing result corresponding to the target data to the AF or the NCU.

22. An electronic device, comprising:
a processor; and
a memory, configured to store computer-executable instructions, wherein the executable instructions, when executed, use the processor to perform the steps of the communication method according to any one of claims 1 to 21.

23. A computer-readable medium, storing one or more programs, wherein the one or more programs, when executed by an electronic device comprising a plurality of application programs, cause the electronic device to perform the steps of the communication method according to any one of claims 1 to 21.
